# EUROPEAN PATENT APPLICATION

(11) **EP 3 605 345 A1**
(43) Date of publication of application: **05.02.2020**
(21) Application number: 18777673.7
(22) Date of filing: 27.02.2018
(51) Int. Cl.: G06F 13/00, G11B 20/10, H04N 5/93, H04N 21/436, H04N 21/458

(54) **CONTENT DISTRIBUTION SYSTEM, PLAYBACK DEVICE, AND CONTENT DISTRIBUTION METHOD**

(30) Priority: 28.03.2017 JP 2017064020
(71) Applicant: Panasonic Intellectual Property Management Co., Ltd., Osaka-shi, Osaka 540-6207 (JP)
(72) Inventor: MIYAKE Yasushi, Osaka 540-6207 (JP)
(74) Representative: Vigand, Philippe
(86) International application number: PCT/JP2018/007104
(87) International publication number: WO 2018/180110

(57) **Abstract**

A content distribution system (100) includes a playback apparatus (10) and a content distribution apparatus (20). The content distribution apparatus (20) includes: the second communication unit (21) that receives a request for first content data from the playback apparatus (10); and a distribution controller (22) that causes the second communication unit (21) to transmit the first content data and second content data that is determined to be played back next to the first content data in a playback order of pieces of content data, when the received request for the first content data includes gapless playback instruction information.

## Description

### TECHNICAL FIELD

The present disclosure relates to a content distribution system, a playback apparatus, and a content distribution method.

### BACKGROUND ART

Patent Literature (PTL) 1 discloses a recording apparatus and a playback apparatus for music data.

### Citation List

### Patent Literature

PTL 1: Japanese Unexamined Patent Application Publication No. 2004-93729

### SUMMARY OF THE INVENTION

### TECHNICAL PROBLEM

The present disclosure provides a content distribution system, a playback apparatus, and a content distribution method, with which it is possible to reduce the occurrence of a blank period between contents during the continuous playback of the contents.

### SOLUTION TO PROBLEM

A content distribution system according to one aspect of the present disclosure includes: a playback apparatus; and a content distribution apparatus. The playback apparatus includes: a first communication unit; and a playback controller that causes the first communication unit to transmit a request for first content data, and plays back the first content data received by the first communication unit. The content distribution apparatus includes: a second communication unit that receives the request for the first content data from the playback apparatus; and a distribution controller that causes the second communication unit to transmit the first content data and second content data when the request for the first content data received by the second communication unit includes gapless playback instruction information, the second content data being determined to be played back next to the first content data in a playback order of pieces of content data.

### ADVANTAGEOUS EFFECT OF INVENTION

With the content distribution system according to one aspect of the present disclosure, it is possible to reduce the occurrence of a blank period between contents during the continuous playback of the contents.

### BRIEF DESCRIPTION OF DRAWINGS

FIG. 1 is an external view illustrating devices that configure a content distribution system according to an embodiment;
FIG. 2 is a block diagram illustrating a functional configuration of the content distribution system according to the embodiment;
FIG. 3 is a diagram for explaining a method for transmitting music data when normal playback of a compact disc (CD) album is performed;
FIG. 4 is a diagram for explaining a method for transmitting music data when gapless playback of a CD album is performed;
FIG. 5 is a sequence diagram illustrating the operations of the content distribution system according to the embodiment;
FIG. 6 is a flowchart illustrating the transmission of a request for the first music data;
FIG. 7 illustrates a data format for requesting the first music data;
FIG. 8 is a flowchart illustrating the transmission of the first music data;
FIG. 9 illustrates a data format used for transmitting all of pieces of music data determined to be played back starting from the first music data in the playback order of the pieces of music data;
FIG. 10 is a flowchart illustrating the playback of the first music data; and
FIG. 11 is an external view illustrating devices that configure a content distribution system according to a variation.

### DESCRIPTION OF EXEMPLARY EMBODIMENT

The following describes in detail an embodiment with reference to the drawings. Note, however, that a detailed description is omitted in some cases where such a description is deemed unnecessary. For example, the detailed description of matters that are already well-known and the duplicate description of a substantially identical configuration are omitted in some cases. This is to avoid unnecessary and redundant descriptions and allow easy comprehension by those skilled in the art.

It should be noted that the inventor(s) provide appended drawings and the following description so that those skilled in the art fully understand the present disclosure, and the drawings and description are not intended to limit the subject matters recited in the scope of the claims. The appended drawings are schematic illustrations and are not necessarily precise depictions. Moreover, in the figures, elements that are essentially the same share like reference signs and duplicate description is omitted or simplified in some cases.

### EMBODIMENT

### [Outline of Content Distribution System]

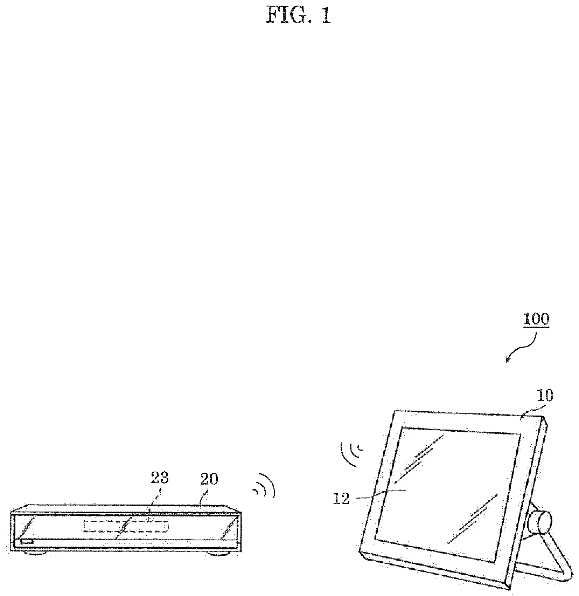

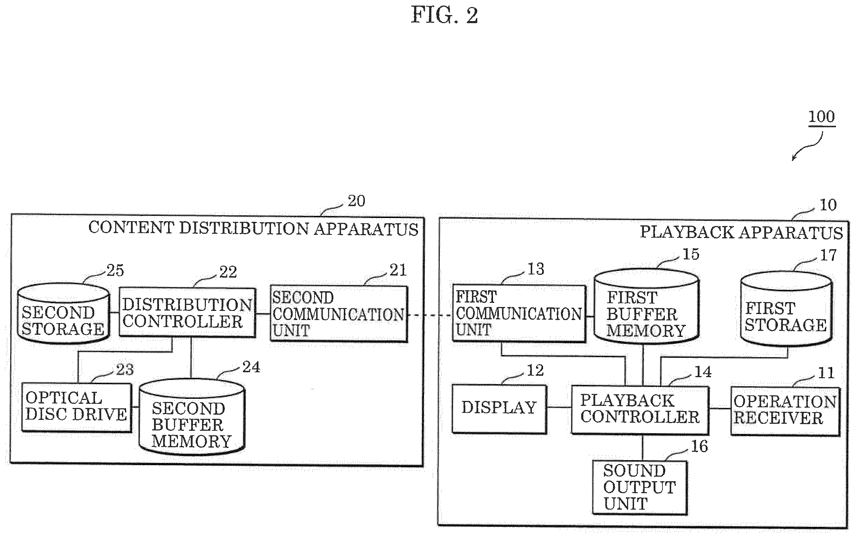

First, an overall configuration of a content distribution system according to an embodiment will be described. FIG. 1 is an external view illustrating devices that configure the content distribution system according to the embodiment. FIG. 2 is a block diagram illustrating a functional configuration of the content distribution system according to the embodiment.

Content distribution system 100 illustrated in FIG. 1 and FIG. 2 includes playback apparatus 10 and content distribution apparatus 20. Content distribution system 100 is installed, for example, in a house. Playback apparatus 10 receives content data transmitted from content distribution apparatus 20 through wireless communication and performs streaming playback. Therefore, a user carrying playback apparatus 10 with him/her can view content corresponding to the content data transmitted from content distribution apparatus 20 in any place at home.

Playback apparatus 10 is a display device of portable type and includes display 12 and sound output unit 16. Content distribution apparatus 20 includes a tuner that receives broadcast wave, and transmits video data corresponding to the received broadcast wave, although not shown in the diagram. Thus, video corresponding to the transmitted video data is displayed by display 12 of playback apparatus 10.

Content distribution apparatus 20 also includes optical disc drive 23 and transmits, to playback apparatus 10, music data recorded on an optical disc inserted in optical disc drive 23. Thus, music corresponding to the transmitted music data is output from sound output unit 16 in playback apparatus 10.

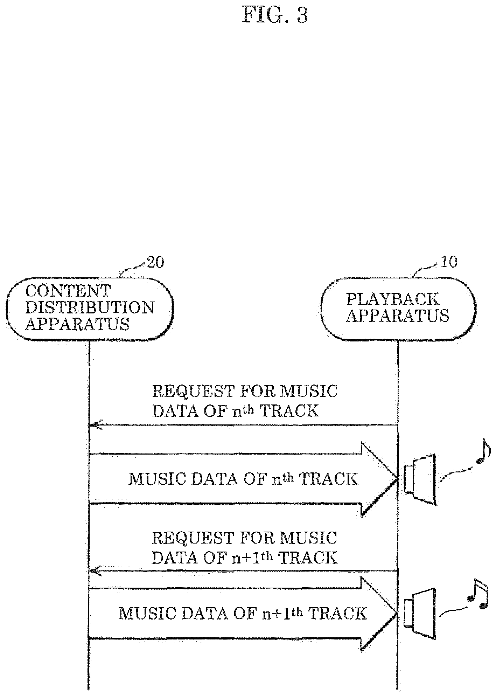

Here, the playback order of pieces of music data recorded on the optical disc is determined in advance. For example, in the case where the optical disc is a CD album, the order of playing back the tracks recorded on the optical disc is determined in advance, and when the playback of one track is ended by playback apparatus 10, the next track following that track is subsequently played back. FIG. 3 is a diagram for explaining a method for transmitting music data when normal playback of a CD album is performed. It should be noted that the music data signifies data of tracks recorded on an optical disc and a piece of music data is equivalent to one track.

In the normal playback, each time playback apparatus 10 transmits a request for a piece of music data, content distribution apparatus 20 transmits the requested piece of music data, as illustrated in FIG. 3. More specifically, when playback apparatus 10 transmits a request for the music data of n^{th} track, content distribution apparatus 20 transmits the music data of n^{th} track. When the CD album is played, playback apparatus 10 transmits a request for the music data of n+1^{th} track after the playback of the music data of n^{th} track.

This causes a problem that a delay time is generated due to wireless communication because wireless communication between playback apparatus 10 and content distribution apparatus 20 starts after the playback of the music data of n^{th} track. More specifically, even when there is no silent period between the music data of n^{th} track and the music data of n+1^{th} track in the case of playing the CD album using a general CD player or the like, a silent period might occur, in some cases, due to the delay time as mentioned above. Such an occurrence of a silent period which normally should not occur is against the intention of the creator(s) of the CD album.

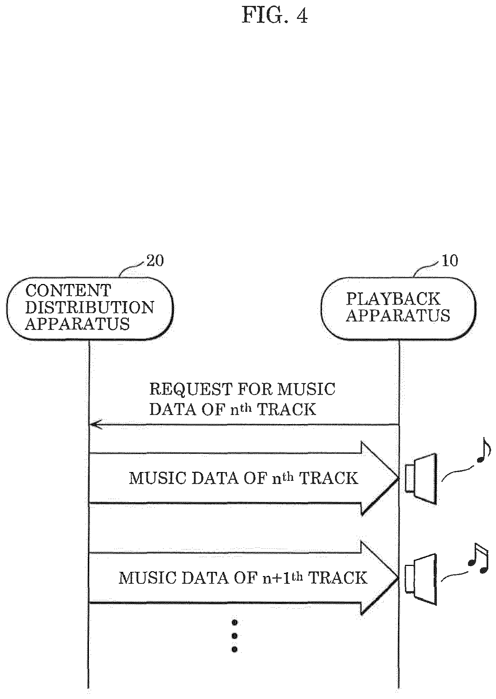

In view of the above, content distribution system 100 enables gapless playback which reduces the occurrence of a silent period that normally should not occur. FIG. 4 is a diagram for explaining a method for transmitting music data when gapless playback of a CD album is performed.

In the gapless playback, when playback apparatus 10 transmits a request for a piece of music data, content distribution apparatus 20 transmits pieces of music data determined to be played back starting from the requested piece of music data in the playback order of the pieces of music data, as illustrated in FIG. 4. More specifically, when playback apparatus 10 transmits a request for the music data of n^{th} track, content distribution apparatus 20 transmits not only the music data of n^{th} track but also the music data of n+1^{th} track and the subsequent tracks. Thus, with content distribution system 100, it is possible to reduce the occurrence of a silent period that normally should not occur.

With content distribution system 100, it is possible to selectively perform normal or gapless playback in accordance with user's operation. The following describes each of the devices that configure content distribution system 100 as described above, by mainly referring to FIG. 2.

### [Playback Apparatus]

As has been described above, playback apparatus 10 is a display device of portable type and is capable of video display and audio output. More specifically, playback apparatus 10 includes operation receiver 11, display 12, first communication unit 13, playback controller 14, first buffer memory 15, sound output unit 16, and first storage 17, as illustrated in FIG. 2.

Operation receiver 11 is a user interface that receives user's operation. In the embodiment, operation receiver 11 is a graphical user interface (GUI) that includes a touch panel. The detailed features of operation receiver 11 shall not be particularly restricted to such and may be, for example, a hardware key. More specifically, a hardware key is a button or the like. Operation receiver 11 may be a remote controller (not shown in the diagram) of playback apparatus 10.

Display 12 displays images based on the control performed by playback controller 14. More specifically, display 12 can be realized by a liquid crystal panel, an organic EL panel, or the like.

First communication unit 13 is a communication module for wireless communication between playback apparatus 10 and content distribution apparatus 20. Stated differently, a communication module is a communication circuit. More specifically, first communication unit 13 performs wireless communication in compliance with a digital living network alliance (DLNA (R)) communication protocol.

First communication unit 13, for example, transmits a request for music information and a request for music data to content distribution apparatus 20 based on the control performed by playback controller 14. Moreover, first communication unit 13 receives music information and music data from content distribution apparatus 20.

Music information indicates tracks recorded on a CD album inserted in optical disc drive 23, and includes the number of the tracks recorded on the CD album, the running time of each track, a starting time of each track, etc. Stated differently, music information is track information. Music data is substantial data for playing the tracks recorded on the CD album, and is audio data in a pulse code modulation (PCM) format. The music data received by first communication unit 13 is stored in first buffer memory 15.

Playback controller 14 performs various information processing related to the operations of playback apparatus 10. More specifically, playback controller 14 is realized by a processor, a micro computer, or a dedicated circuit. Playback controller 14 may be realized by a combination of at least two of a processor, a micro computer, and a dedicated circuit.

Upon the reception, by operation receiver 11, of an initial operation for playing back music data, for example, playback controller 14 causes first communication unit 13 to transmit a request for music information. When first communication unit 13 receives music information as a result of the transmission of the request for music information, playback controller 14 causes display 12 to display images for music data selection.

Moreover, upon the reception, by operation receiver 11, of an operation for selecting a piece of music data during the display of the images for music data selection, playback controller 14 causes first communication unit 13 to transmit a request for the selected music data. As a result of the transmission of the request for the music data, the music data received by first communication unit 13 is stored in first buffer memory 15. Playback controller 14 reads out the music data received by first communication unit 13 and stored in first buffer memory 15, and decodes the read-out music data. Then, playback controller 14 outputs the decoded music data to sound output unit 16. As a result, the music data is played back.

First buffer memory 15 is a storage in which the music data received by first communication unit 13 is temporarily stored. More specifically, first buffer memory 15 is realized by a semiconductor memory or the like.

Sound output unit 16 outputs playback sound based on the decoded music data. More specifically, sound output unit 16 is a speaker. It should be noted that sound output unit 16 may be placed outside playback apparatus 10.

First storage 17 is a storage that stores a control program or the like to be executed by playback controller 14. More specifically, first storage 17 is realized by a semiconductor memory or the like.

### [Content Distribution Apparatus]

Content distribution apparatus 20 is an apparatus that transmits music data to playback apparatus 10. Content distribution apparatus 20 includes second communication unit 21, distribution controller 22, optical disc drive 23, second buffer memory 24, and second storage 25.

Second communication unit 21 is a communication module for wireless communication between content distribution apparatus 20 and playback apparatus 10. Stated differently, a communication module is a communication circuit. More specifically, second communication unit 21 performs wireless communication in compliance with the DLNA (R) communication protocol.

Second communication unit 21, for example, receives a request for music information and a request for music data from playback apparatus 10. Moreover, second communication unit 21 transmits music information and music data to playback apparatus 10 based on the control performed by distribution controller 22.

Distribution controller 22 performs various information processing related to the operations of content distribution apparatus 20. More specifically, distribution controller 22 is realized by a processor, a micro computer, or a dedicated circuit. Distribution controller 22 may be realized by a combination of at least two of a processor, a micro computer, and a dedicated circuit.

Upon the reception, by second communication unit 21, of a request for music information, for example, distribution controller 22 obtains music information recorded on an optical disc in optical disc drive 23, by controlling optical disc drive 23, and causes second communication unit 21 to transmit the obtained music information. Moreover, upon the reception, by second communication unit 21, of a request for a piece of music data, distribution controller 22 causes optical disc drive 23 to read out the requested piece of music data, by controlling optical disc drive 23. The read-out music data is output to second buffer memory 24. Distribution controller 22 causes second communication unit 21 to transmit the music data that has temporarily been stored in second buffer memory 24.

Optical disc drive 23 outputs the music information recorded on the optical disc in optical disc drive 23, based on the control performed by distribution controller 22. Optical disc drive 23 also outputs, to second buffer memory 24, the music data recorded on the optical disc inserted in optical disc drive 23, based on the control performed by distribution controller 22. More specifically, optical disc drive 23 has a spindle motor that causes an optical disc to spin, an optical head that reads out, from the spinning optical disc, the music data recorded on the optical disc, and so on.

Second buffer memory 24 is a storage in which the music data output by optical disc drive 23 is temporarily stored. More specifically, second buffer memory 24 is realized by a semiconductor memory or the like. It should be noted that second buffer memory 24 may be included in optical disc drive 23.

Second storage 25 is a storage that stores a control program or the like to be executed by distribution controller 22. More specifically, second storage 25 is realized by a semiconductor memory or the like.

### [Operations of Content Distribution System]

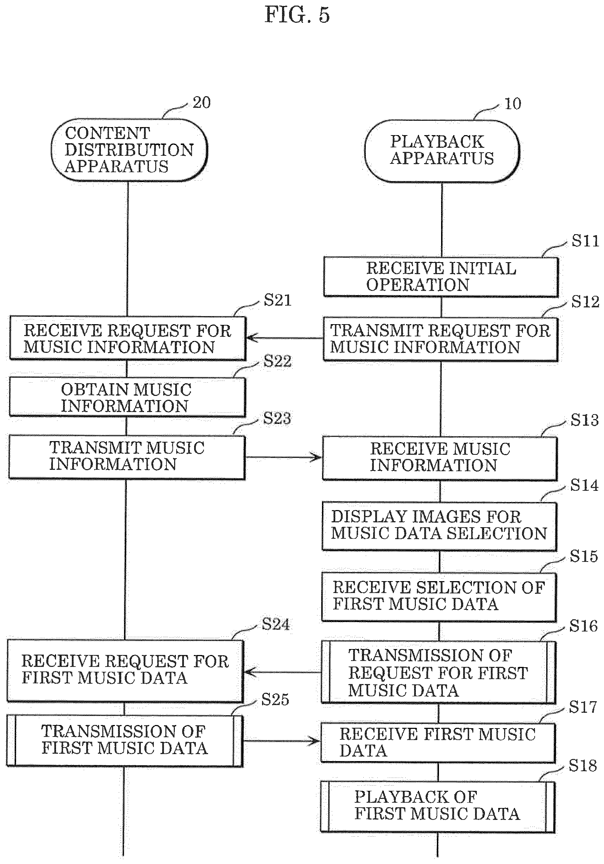

Next, the operations of content distribution system 100 will be described. FIG. 5 is a sequence diagram illustrating the operations of content distribution system 100.

First, operation receiver 11 in playback apparatus 10 receives an initial operation for starting the operations illustrated in FIG. 5 (S11). Upon the reception, by operation receiver 11, of the initial operation, playback controller 14 causes first communication unit 13 to transmit a request for music information (S12).

Second communication unit 21 in content distribution apparatus 20 receives the request for music information transmitted by first communication unit 13 (S21). Upon the reception, by second communication unit 21, of the request for music information, distribution controller 22 obtains the music information recorded on the optical disc in optical disc drive 23, by controlling optical disc drive 23 (S22), and causes second communication unit 21 to transmit the obtained music information (S23).

First communication unit 13 in playback apparatus 10 receives the music information transmitted by second communication unit 21 (S13). The received music information is stored, for example, in first storage 17. Upon the reception, by first communication unit 13, of the music information, playback controller 14 causes display 12 to display images for music data selection (S14). More specifically, playback controller 14 generates a video signal based on the received music information, and outputs the generated video signal to display 12. With this, the images for music data selection are displayed on display 12.

Operation receiver 11 receives an operation for selecting a piece of music data during the display of the images for music data selection (S15). In the operation example illustrated in FIG. 5, the first music data is selected among the pieces of music data recorded on the optical disc.

Upon the reception, by operation receiver 11, of the music data selection operation, playback controller 14 transmits a request for the selected first music data (S16). In the transmission of the request for the first music data, playback controller 14 determines whether or not to include gapless playback instruction information in the request for the first music data, according to user's operation. The details of the transmission of the request for the first music data will be described later on.

After the transmission of the request for the first music data in step S16, second communication unit 21 in content distribution apparatus 20 receives the request for the first music data, which is transmitted by first communication unit 13 (S24). Upon the reception, by second communication unit 21, of the request for the first music data, distribution controller 22 transmits the first music data (S25).

In the transmission of the first music data, distribution controller 22 determines whether to transmit the first music data in the manner adapted for normal playback as illustrated in FIG. 3 or transmit at a time the pieces of music data including the first music data in the manner adapted for gapless playback as illustrated in FIG.4, based on whether or not the received request for the first music data includes gapless playback instruction information. The details of the transmission of the first music data will be described later on.

After the transmission of the first music data in step S25, first communication unit 13 in playback apparatus 10 receives at least the first music data (S17). Playback controller 14 plays back the received first music data (S18). The details of the playback of the first music data will be described later on.

### [Transmission of Request for the First Music Data]

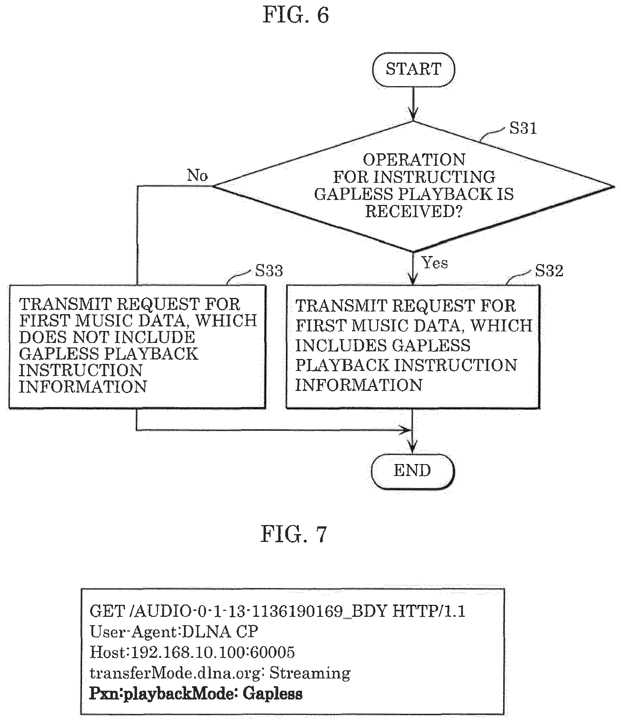

The details of the transmission of the request for the first music data carried out in step S16 in FIG. 5 will be described. FIG. 6 is a flowchart illustrating the transmission of the request for the first music data.

First, playback controller 14 determines whether or not an operation for instructing gapless playback is received by operation receiver 11 (S31). It should be noted that the operation for instructing gapless playback needs to be received at any timing before the transmission of the request for the first music data.

When determining that the operation for instructing gapless playback is received by operation receiver 11 (Yes in S31), playback controller 14 causes first communication unit 13 to transmit a request for the first music data, which includes gapless playback instruction information (S32). On the other hand, when determining that the operation for instructing gapless playback is not received by operation receiver 11 (No in S31), playback controller 14 causes first communication unit 13 to transmit a request for the first music data, which does not include gapless playback instruction information (S33).

Thus, playback controller 14 determines whether or not to include gapless playback instruction information in the request for the first music data, according to the user's operation received by operation receiver 11. It should be noted that a request for the first music data is transmitted, for example, in a data format compliant with a hypertext transfer protocol (HTTP), to be more specific. Stated differently, a request for the first music data is an HTTP request. FIG. 7 illustrates a data format for requesting the first music data. A line that reads "Pxn:playbackMode: Gapless" in the data format illustrated in FIG. 7 corresponds to gapless playback instruction information.

### [Transmission of the First Music Data]

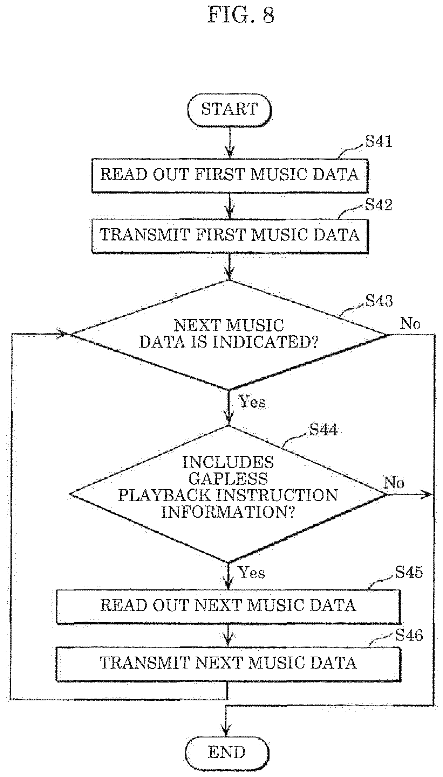

The details of the transmission of the first music data carried out in step S25 in FIG. 5 will be described. FIG. 8 is a flowchart illustrating the transmission of the first music data.

First, distribution controller 22 reads out the first music data by controlling optical disc drive 23 (S41). More specifically, distribution controller 22 causes optical disc drive 23 to output the first music data recorded on the optical disc, and temporarily stores the output first music data in first buffer memory 15.

Next, distribution controller 22 causes second communication unit 21 to transmit the first music data stored in first buffer memory 15 (S42), and determines whether the music data next to the first music data is indicated in the music information obtained in step S22 in FIG. 5 (S43). When it is determined that the music data next to the first music data is not indicated in the music information (No in S43), that is, when the first music data is the last track in the CD album, the transmission ends.

On the other hand, when it is determined that the music data next to the first music data is indicated in the music information (Yes in S43), distribution controller 22 determines whether or not the request for the first music data, which is received in step S24 in FIG.5, includes gapless playback instruction information (S44). When it is determined that the received request does not include gapless playback instruction information (No in S44), the transmission of the first music data ends.

Thus, when the request for the first music data does not include gapless playback instruction information, distribution controller 22 causes second communication unit 21 to transmit, in response to the request for the first music data, only the first music data among the pieces of music data recorded on the optical disc.

On the other hand, when it is determined that the request for the first music data includes gapless playback instruction information (Yes in S44), distribution controller 22 reads out the music data next to the first music data by controlling optical disc drive 23 (S45). The music data next to the first music data is also referred to as the second music data. More specifically, distribution controller 22 causes optical disc drive 23 to output the next music data recorded on the optical disc, and temporarily stores the output music data into first buffer memory 15. Then, distribution controller 22 causes second communication unit 21 to transmit the music data stored in first buffer memory 15 (S46), and determines whether or not the next music data to be played back is indicated in the music information (S43).

Thus, when the request for the first music data includes gapless playback instruction information, distribution controller 22 causes second communication unit 21 to transmit, in response to the request for the first music data, all the pieces of music data determined to be played back starting from the first music data in the playback order of the pieces of music data. Thus, playback apparatus 10 does not need to transmit a request for the next music data after the playback of the first music data. Accordingly, the occurrence of a silent period that should not normally occur is reduced.

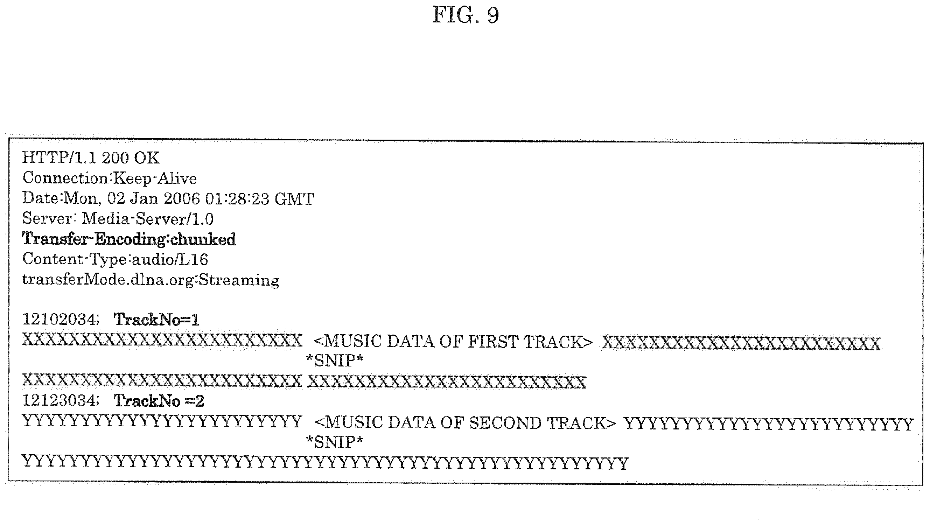

More specifically, all the pieces of music data, which is determined to be played back starting from the first music data in the playback order, is transmitted, for example, in a data format compliant with the HTTP. Stated differently, all the pieces of music data as such is transmitted as an HTTP response. FIG. 9 illustrates a data format used for transmitting all the pieces of music data determined to be played back starting from the first music data in the playback order.

The data format illustrated in FIG. 9 includes a description that reads "Transfer-Encoding:chunked". The description indicates that music data is transmitted by a transmission unit called chunk. When the first music data and the second music data that is determined to be played back next to the first music data in the playback order are transmitted, for example, the first chunk that includes the first music data and the second chunk that includes the second music data are transmitted.

In the example illustrated in FIG. 9, a track number is included in a chunk header which is the header region of a chunk. A track number is an example of order information indicating at which position in the playback order each piece of music data is to be played back. When the first music data and the second music data are transmitted, for example, the following is transmitted: the first chunk that includes the first music data and the first order information indicating at which position in the playback order the first music data is to be played back; and the second chunk that includes the second music data and the second order information indicating at which position in the playback order the second music data is to be played back.

In the normal playback as described above, one piece of music data is received in response to a request for one piece of music data, and therefore, playback controller 14 can easily recognize a track number of the music data that is currently being played back and cause display 12 to display the track number.

In contrast, in the gapless playback, pieces of music data are received as one stream in response to the request for one piece of music data. It is therefore difficult for playback controller 14 to recognize a boundary between one music data and the next music data. Stated differently, it is difficult for playback controller 14 to recognize a track number of the music data that is currently being played back, and cause display 12 to display the track number.

In view of the above, when one chunk includes one piece of music data, by detecting a boundary between chunks, playback controller 14 is capable of recognizing the boundary between the chunks as a boundary between the pieces of music data. In other words, through the processing of counting track numbers, etc., playback controller 14 is capable of recognizing a track number of the music data that is currently being played back and causing display 12 to display the track number.

Moreover, when a track number of music data is transmitted together with the music data, playback controller 14 is capable of easily causing display 12 to display a track number of the music data that is currently being played back, without processing such as counting track numbers etc.

It should be noted that it is not a must to transmit, in response to a request for the first music data, all the pieces of music data determined to be played back starting from the first music data in the playback order. Distribution controller 22 needs to cause second communication unit 21 to transmit, at least, the first music data and the second music data in response to the request for the first music data. As has been described above, the second music data is music data determined to be played back next to the first music data in the playback order.

### [Playback of the First Music Data]

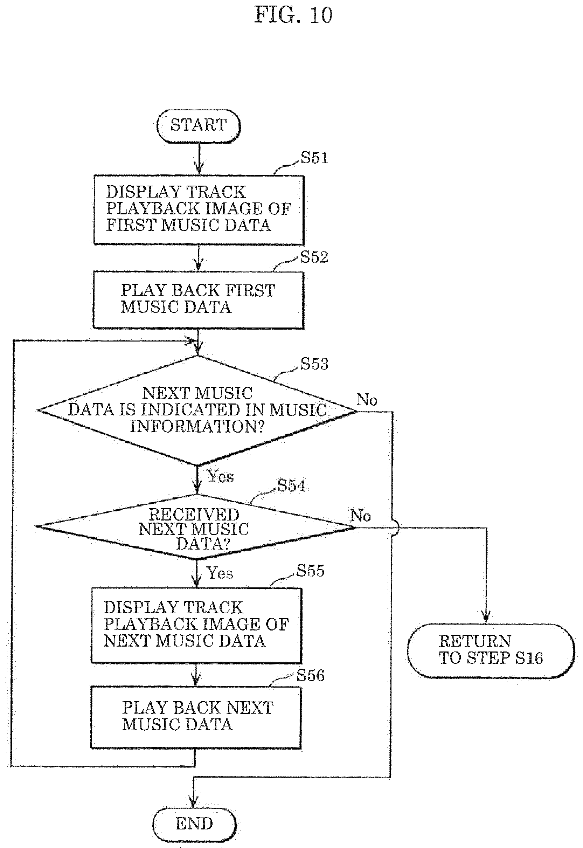

The details of the playback of the first music data carried out in step S18 in FIG. 5 will be described. FIG. 10 is a flowchart illustrating the playback of the first music data.

First, playback controller 14 causes display 12 to display a track playback image of the first music data (S51). More specifically, playback controller 14 causes display 12 to display the track playback image of the first music data, by outputting a video signal to display 12. A track playback image includes a track number, which is received as order information together with the first music data.

Next, playback controller 14 plays back the first music data (S52). Playback controller 14 reads out the first music data received by first communication unit 13 and stored in first buffer memory 15, and decodes the read-out first music data. Then, playback controller 14 outputs the decoded first music data to sound output unit 16. As a result, the first music data is played back.

Next, by referring to the music information received in step S13 in FIG. 5 and stored in first storage 17, playback controller 14 determines whether or not the music data next to the first music data is indicated in the music information (S53). When it is determined that the music data next to the first music data is not indicated in the music information (No in S53), that is, when the first music data is the last track in the CD album, the playback of the music data ends.

On the other hand, when it is determined that the music data next to the first music data is indicated in the music information (Yes in S53), playback controller 14 determines whether or not the next music data has already been received, by referring to first buffer memory 15 (S54). As has been described above, it is possible to recognize a boundary between the first music data and the next music data by detecting a boundary between the chunks. The case where it is determined that the next music data has not been received (No in S54) is a case where normal playback is instructed by the user, if stated differently. In this case, the same processing as carried out in step S16 in FIG. 5 is performed. Namely, a request for the second music data next to the first music data is transmitted.

Thus, in the normal playback, playback apparatus 10 transmits a request for the second music data after the playback of the first music data, therefore, a silent period that should not normally occur might occur in some cases.

In contrast, the case where it is determined that the next music data has been received (Yes in S54) is a case where gapless playback is instructed by the user, if stated differently. In this case, playback controller 14 causes display 12 to display a track playback image of the music data next to the first music data (S55), and plays back that next music data (S56). Playback controller 14 then determines whether or not the next music data to be played back is indicated in the music information (S53).

Thus, in the gapless playback, since the music data next to the first music data is received in advance the occurrence of a silent period that should not normally occur is reduced.

### [Variation]

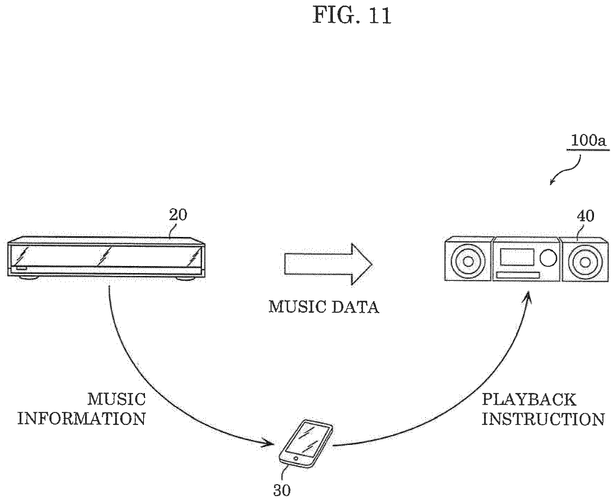

It should be noted that playback apparatus 10 may be divided into a controller and a renderer. FIG. 11 is an external view of devices that configure a content distribution system according to such a variation.

Content distribution system 100a illustrated in FIG. 11 includes remote controller 30, renderer 40, and content distribution apparatus 20. Remote controller 30 and renderer 40 configure a playback apparatus.

Remote controller 30 is, for example, a general portable terminal such as a smart phone or a tablet-type device, but may be a dedicated remote controller of content distribution system 100a. When a general portable terminal is used as remote controller 30, an application program for causing the portable terminal to function as the dedicated controller of content distribution system 100a is installed in advance.

Renderer 40 is, for example, a speaker system having a function for communication with content distribution apparatus 20 and remote controller 30.

In such content distribution system 100a, the processing in step S11 through S15 in FIG. 5 is carried out by remote controller 30 while the processing in step S16 through S18 is carried out by renderer 40. Such content distribution system 100a also enables the gapless playback of the first content data and the second content data.

### [Advantageous Effects etc.]

As has been described above, content distribution system 100 includes playback apparatus 10 and content distribution apparatus 20. Playback apparatus 10 includes first communication unit 13 and playback controller 14 that causes first communication unit 13 to transmit a request for the first content data, and plays back the first content data received by first communication unit 13. Content distribution apparatus 20 includes second communication unit 21 that receives a request for the first content data from playback apparatus 10, and distribution controller 22 that causes second communication unit 21 to transmit the first content data and the second content data that is determined to be played back next to the first content data in a playback order of pieces of content data, when the request for the first content data received by second communication unit 21 includes gapless playback instruction information. The first content data is, for example, the first music data according to the aforementioned embodiment, and the second content data is, for example, the second music data according to the aforementioned embodiment.

Accordingly, when the first content data and the second content data are played back in a continuous manner, it is possible, with content distribution system 100, to reduce the occurrence of an unnecessary blank period before the playback of the second content data after the playback of the first content data. Stated differently, content distribution system 100 enables the gapless playback of the first content data and the second content data.

Moreover, distribution controller 22 may cause second communication unit 21 to transmit the first order information and the second information in response to the request for the first content data. The first order information indicates at which position in the playback order the first content data is to be played back and the second order information indicates at which position in the playback order the second content data is to be played back. The first order information and the second order information are, for example, the track information according to the aforementioned embodiment.

Accordingly, even when pieces of content data are received in response to a request for one piece of content data, playback apparatus 10 easily recognizes at which position in the playback order each piece of content data is to be played back. For example, playback apparatus 10 is capable of easily displaying, on display 12, at which position in the playback order each piece of content data is to be played back.

Moreover, distribution controller 22 may cause second communication unit 21 to transmit the first transmission unit and the second transmission unit in response to the request for the first content data. The first transmission unit includes the first content data and the first order information, and the second transmission unit includes the second content data and the second order information. The first and second transmission units each are, for example, the chunks according to the aforementioned embodiment.

With this, playback apparatus 10 is capable of easily recognizing a boundary between the pieces of content data by detecting a boundary between the transmission units.

Moreover, distribution controller 22 may cause second communication unit 21 to transmit all the pieces of content data in response to the request for the first content data. The pieces of content data are determined to be played back starting from the first content data in the playback order.

Moreover, distribution controller 22 may cause second communication unit 21 to transmit only the first content data out of the first content data and the second content data in response to the request for the first content data, when the request for the first content data received by second communication unit 21 does not include gapless playback instruction information.

This enables content distribution apparatus 20 to switch between the transmission of the first content data only and the transmission of both the first content data and the second content data, by determining whether or not the request for the first content data includes gapless playback instruction information.

Accordingly, it is possible, with content distribution system 100, to perform the gapless playback of all the pieces of content data determined to be played back starting from the first content data in the playback order.

Moreover, the first content data and the second content data each are music data recorded on a recording medium, and distribution controller 22 may cause second communication unit 21 to transmit the first content data and the second content data obtained from the recording medium. The recording medium is, for example, a CD.

Accordingly, when the first music data and the second music data are played back in a continuous manner, it is possible, with content distribution system 100, to reduce the occurrence of an unnecessary blank period before the playback of the second music data after the playback of the first music data.

Moreover, playback apparatus 10 may further include operation receiver 11 that receives user's operation. Playback controller 14 may determine whether or not to include the gapless playback instruction information in the request for the first content data, according to the user's operation received by operation receiver 11.

This enables content distribution apparatus 20 to switch between the transmission of the first content data only and the transmission of both the first content data and the second content data, by determining whether or not the request for the first content data includes gapless playback instruction information.

Moreover, playback apparatus 10 includes first communication unit 13, playback controller 14 that causes first communication unit 13 to transmit a request for content data, and plays back the content data received by first communication unit 13, and operation receiver 11 that receives user's operation. Playback controller 14 determines whether or not to include gapless playback instruction information in the request for the first content data, according to the user's operation received by operation receiver 11.

This enables content distribution apparatus 20 to switch between the transmission of the first content data only and the transmission of both the first content data and the second content data, by determining whether or not the request for the content data includes gapless playback instruction information.

Moreover, a content distribution method to be executed by a computer such as content distribution apparatus 20 includes: receiving a request for the first content data from playback apparatus 10; and transmitting the first content data and the second content data when the request for the first content data received by second communication unit 21 includes gapless playback instruction information. The second content data is determined to be played back next to the first content data in the playback order of pieces of content data.

When the first content data and the second content data are played back in a continuous manner, it is possible, with such a content distribution method, to reduce the occurrence of an unnecessary blank period before the playback of the second content data after the playback of the first content data.

Moreover, the present disclosure may be realized as a program for causing a computer to execute the above-described content distribution method.

When the first content data and the second content data are played back in a continuous manner, it is possible, with such a program, to reduce the occurrence of an unnecessary blank period before the playback of the second content data after the playback of the first content data.

### OTHER EMBODIMENTS

As has been described above, the embodiment is described as an illustration of the technique disclosed in the present application. The technique disclosed in the present disclosure, however, shall not be restricted to the embodiment and is also applicable to an embodiment to which modifications, replacement, additions, omissions, etc. are made where necessary. In addition, a new embodiment can be formed by combining each of the components described in the aforementioned embodiment. In view of the above, other embodiments will be described in the following.

Although music data is received or transmitted, for example, in a PCM format in the aforementioned embodiment, it should be understood that the music data may be received or transmitted in a compressed format such as MP3 format. In this case, a content distribution apparatus once decodes PCM formatted music data and subsequently encodes the decoded music data into a format, e.g., MP3 format. In other words, the content distribution apparatus may include a decoder and an encoder.

Although the pieces of music data of which the playback order is determined are played back in a continuous manner in the aforementioned embodiment, it should be understood that pieces of still or moving image data of which the playback order is determined may be played back in a continuous manner. In other words, the content data shall not be restricted to music data, and may be still or moving image data.

Although music data for playback at a normal speed is transmitted from the content distribution apparatus in the aforementioned embodiment, it should be understood that music data for playback at a fast-forward speed may be transmitted. Likewise, music data for playback at a slow speed may be transmitted from the content distribution apparatus. In other words, content data, of which the playback speed has been modified by the content distribution apparatus in such a manner to be different from a normal speed, may be transmitted by the content distribution apparatus.

Moreover, although the pieces of content data are recorded in a CD in the aforementioned embodiment, they may be recorded in a DVD, in a Blu-ray disc (BD (R)), or in any other type of optical disc such as an archival disc (AD (R)). Additionally, the pieces of content data may be recorded in a recording medium, such as a hard disk drive (HDD) or a semiconductor memory, instead of an optical disc. In other words, it is not essential that the content distribution apparatus include an optical disc drive.

Moreover, the content distribution apparatus switches between the transmission of requested content data only and the transmission of the requested content data and the content data next to the requested content data. However, the content distribution apparatus may always transmit requested content data and the content data next to the requested content data. In other words, gapless playback may be always performed in the content distribution system. In this case, the process of including gapless playback instruction information in a request for content data may be omitted.

Although the content distribution system according to the aforementioned embodiment performs communication utilizing a small-scale communication network such as a local area network (LAN), it should be understood that a large-scale communication network such as a wide area network (WAN) may be utilized. The playback apparatus and the content distribution apparatus may communicate, for example, through the Internet. In this case, the playback apparatus may be a universal apparatus such as a network audio player, a smart phone, or a tablet-type device, and the content distribution apparatus may be a cloud server.

Moreover, the communication between the playback apparatus and the content distribution apparatus as described in the aforementioned embodiment shall not be restricted to the communication compliant with a DLNA (R) communication protocol. Communication standard such as Zigbee (R), Bluetooth (R), or a wireless local area network (LAN) may be used for the communication between the playback apparatus and the content distribution apparatus. Additionally, wired communication such as communication using a wired LAN may be performed instead of wireless communication.

Moreover, the processing executed by a specific processing unit may be executed by a different processing unit in the aforementioned embodiment. In addition, an order of processes may be changed or the processes may be executed in parallel in the aforementioned embodiment.

Moreover, the components such as the playback controller and the distribution controller in the aforementioned embodiment may be each configured by a dedicated hardware or may be realized by the execution of a software program suitable for each of the components. Each of the components may be realized by reading and execution, by a program execution unit such as a CPU or a processor, of a software program recorded on a recording medium such as a hard disk or a semiconductor memory.

Moreover, the components such as the playback controller and the distribution controller may be each configured as a circuit (or an integrated circuit). These circuits may configure one circuit as a whole or may be separate circuits. What is more, these circuits each may be a generalized circuit or a dedicated circuit.

Moreover, an overall or concrete embodiment according to the present disclosure may be realized by a system, an apparatus, a method, an integrated circuit, a computer program, or a computer-readable recording medium such as a CD-ROM. Additionally, the embodiment may be realized by any combination of a system, an apparatus, a method, an integrated circuit, a computer program, and a recording medium. The present disclosure may be realized, for example, as a content distribution apparatus, as a content distribution method to be executed by a computer, or as a program for causing the computer to execute the content distribution method. Similarly, the present disclosure may be realized as a playback apparatus, as a content playback method to be executed by a computer, or as a program for causing the computer to execute the content playback method.

As has been described above, the embodiment is described as an illustration of the technique according to the present disclosure. For this reason, the appended drawings and detailed description are provided.

Therefore, the components described in the appended drawings and detailed description may include not only the components that are essential for solving the aforementioned problem but also the components that are not essential for solving the aforementioned problem, in order to illustrate the aforementioned technique. Accordingly, the recitation, in the appended drawings and detailed description, of the components that are not essential shall not lead to a direct approval that these inessential components are essential.

Furthermore, the aforementioned embodiment is intended to illustrate the technique according to the present disclosure, and therefore, various modifications, replacement, additions, and omissions can be made within the scope of the claims or the scope of their equivalents.

### INDUSTRIAL APPLICABILITY

The present disclosure is useful as a content distribution system with which it is possible to reduce the occurrence of a blank period between contents during the continuous playback of the contents.

### REFERENCE MARKS IN THE DRAWINGS

- 10: playback apparatus
- 11: operation receiver
- 12: display
- 13: first communication unit
- 14: playback controller
- 15: first buffer memory
- 16: sound output unit
- 17: first storage
- 20: content distribution apparatus
- 21: second communication unit
- 22: distribution controller
- 23: optical disc drive
- 24: second buffer memory
- 25: second storage
- 30: remote controller
- 40: renderer
- 100, 100a: content distribution system

## Claims

1. A content distribution system, comprising:
a playback apparatus; and
a content distribution apparatus, wherein
the playback apparatus includes:
a first communication unit; and
a playback controller that causes the first communication unit to transmit a request for first content data, and plays back the first content data received by the first communication unit, and
the content distribution apparatus includes:
a second communication unit that receives the request for the first content data from the playback apparatus; and
a distribution controller that causes the second communication unit to transmit the first content data and second content data when the request for the first content data received by the second communication unit includes gapless playback instruction information, the second content data being determined to be played back next to the first content data in a playback order of pieces of content data.

2. The content distribution system according to claim 1, wherein
the distribution controller causes the second communication unit to transmit first order information and second order information in response to the request for the first content data, the first order information indicating at which position in the playback order the first content data is to be played back, the second order information indicating at which position in the playback order the second content data is to be played back.

3. The content distribution system according to claim 2, wherein
the distribution controller causes the second communication unit to transmit a first transmission unit and a second transmission unit in response to the request for the first content data, the first transmission unit including the first content data and the first order information, the second transmission unit including the second content data and the second order information.

4. The content distribution system according to any one of claims 1 to 3, wherein
the distribution controller causes the second communication unit to transmit all the pieces of content data in response to the request for the first content data, the pieces of content data being determined to be played back starting from the first content data in the playback order.

5. The content distribution system according to any one of claims 1 to 4, wherein
the distribution controller causes the second communication unit to transmit only the first content data out of the first content data and the second content data in response to the request for the first content data, when the request for the first content data received by the second communication unit does not include the gapless playback instruction information.

6. The content distribution system according to any one of claims 1 to 5, wherein
the first content data and the second content data each are music data recorded in a recording medium, and
the distribution controller causes the second communication unit to transmit the first content data and the second content data obtained from the recording medium.

7. The content distribution system according to any one of claims 1 to 6, wherein
the playback apparatus further includes an operation receiver that receives user's operation, and
the playback controller determines whether or not to include the gapless playback instruction information in the request for the first content data, according to the user's operation received by the operation receiver.

8. A playback apparatus, comprising:
a communication unit;
a playback controller that causes the communication unit to transmit a request for content data, and plays back the content data received by the communication unit; and
an operation receiver that receives user's operation, wherein
the playback controller determines whether or not to include gapless playback instruction information in the request for the content data, according to the user's operation received by the operation receiver.

9. A content distribution method, comprising:
receiving a request for first content data from a playback apparatus; and
transmitting the first content data and second content data when the request for the first content data received from the playback apparatus includes gapless playback instruction information, the second content data being determined to be played back next to the first content data in a playback order of pieces of content data.

10. A program for causing a computer to execute the content distribution method according to claim 9.
